# EUROPEAN PATENT APPLICATION

(11) **EP 4 245 435 A1**
(43) Date of publication of application: **20.09.2023**
(21) Application number: 21906049.8
(22) Date of filing: 06.08.2021
(51) Int. Cl.: B21D 22/00

(54) **METHOD FOR PREDICTING CHANGE IN SHAPE OF PRESS-MOLDED ARTICLE**

(30) Priority: 14.12.2020 JP 2020206440
(71) Applicant: JFE Steel Corporation, Tokyo 100-0011 (JP)
(72) Inventor: FUJII, Yusuke, Tokyo 100-0011 (JP); URABE, Masaki, Tokyo 100-0011 (JP); TOBITA, Shunsuke, Tokyo 100-0011 (JP)
(74) Representative: Grünecker Patent- und Rechtsanwälte PartG mbB
(86) International application number: PCT/JP2021/029313
(87) International publication number: WO 2022/130683

(57) **Abstract**

A shape change prediction method of a press formed part according to the present invention predicts a shape change, in which an end side in a longitudinal direction is twisted due to stress relaxation with the lapse of time after die release from a tool of press forming and springback, with respect to a press formed part 1 having a U-shaped cross-sectional shape including a top portion 3 and a pair of side wall portions 5 and having a shape curved in the longitudinal direction in a top view, the method including: a step of acquiring a shape and a residual stress of the press formed part 1 immediately after the springback (S1); a step of setting a value of stress relaxed and reduced compared to the residual stress immediately after the springback for at least one of the pair of side wall portions 5 of the press formed part 1 immediately after the springback (S3); and a step of acquiring a shape with which moment of force is balanced with respect to the press formed part 1 in which the value of the relaxed and reduced stress is set (S5).

## Description

### Field

The present invention relates to a shape change prediction method of a press formed part, and relates more specifically to a shape change prediction method of a press formed part in which method a shape change generated with the lapse of time after die release from a tool of press forming and springback is predicted with respect to the press formed part having a U-shaped cross-sectional shape or a Z-shaped cross-sectional shape and having a shape curved in a longitudinal direction in a top view. Background

Press forming is a manufacturing method capable of manufacturing metal parts at a low cost in a short time, and is used to manufacture many automotive parts. In recent years, in order to achieve both collision safety of an automobile and weight reduction of an automotive body, a metal sheet having higher strength is used for press forming of the automotive parts.

One of main problems in press forming of a high-strength metal sheet is a decrease in dimensional accuracy due to springback. A phenomenon in which a residual stress generated in the press formed part when the metal sheet is deformed by the press forming becomes driving force and the press formed part die-released from the tool of press forming instantaneously tries to return to a shape of the metal sheet before the press forming like a spring is called springback.

Since the residual stress generated during the press forming increases as the strength of the metal sheet increases (for example, for a high-strength steel sheet), a shape change due to the springback also increases. Thus, it becomes more difficult to keep a shape after the springback within a prescribed dimension as the metal sheet has higher strength. Thus, a technology of accurately predicting the shape change of the press formed part due to the springback is important.

For prediction of the shape change due to the springback, it is common to use a press forming simulation by a finite element method. A procedure of the press forming simulation is first divided into a first stage in which a press forming analysis in a process of press forming a metal sheet up to a bottom dead center is performed and a residual stress at the press forming bottom dead center is predicted (for example, Patent Literature 1), and a second stage in which a springback analysis in a process in which a shape of the press formed part die-released (taken out) from a tool of press forming is changed due to springback is performed and a shape in which a moment of force and the residual stress in the die-released press formed press formed part can be balanced is predicted (for example, Patent Literature 2).

### Citation List

### Patent Literature

Patent Literature 1: Japanese Patent No. 5795151
Patent Literature 2: Japanese Patent No. 5866892
Patent Literature 3: Japanese Patent Application Laid-open No. 2013-113144

### Summary

### Technical Problem

Conventionally, by performance of a press forming simulation in which the above-described press forming analysis in the first stage and springback analysis in the second stage are integrated, a shape of a press formed part immediately after a die release from a tool of press forming and springback has been predicted. However, the inventors have found that there is a press formed part shape prediction accuracy of which by the press forming simulation is low when a shape of the press formed part predicted by the press forming simulation is compared with a shape of the press formed part actually press formed.

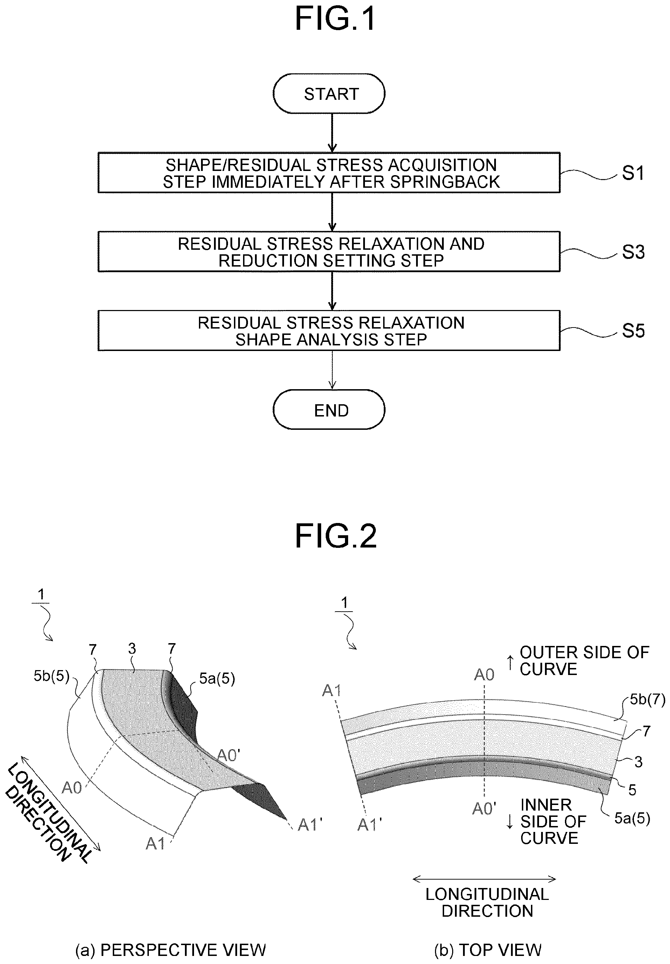

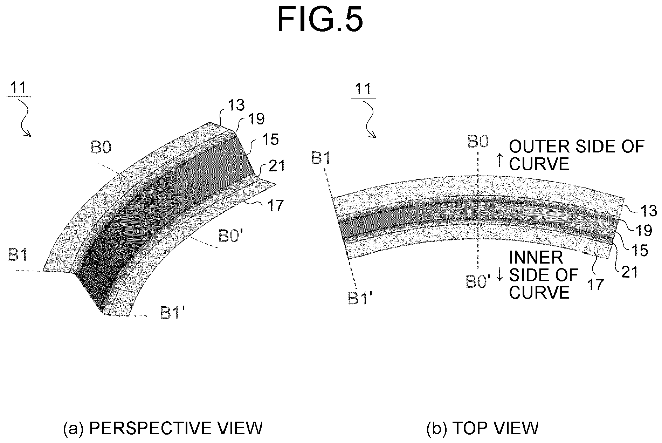

Thus, as a result of investigation on the press formed part with low shape prediction accuracy by the press forming simulation, the following has been found. That is, in a press formed part 1 that has a U-shaped cross-sectional shape including a top portion 3 and a pair of side wall portions 5 and is curved in a longitudinal direction in a top view (in a case of being viewed from a top portion direction) as illustrated as an example in FIG. 2 or a press formed part 11 that has a Z-shaped cross-sectional shape including a top portion 13, a side wall portion 15, and a flange portion 17 and is curved in the longitudinal direction in the top view as illustrated as an example in FIG. 5, such deformation that an end side in the longitudinal direction is twisted with respect to a middle portion in the longitudinal direction is generated after the lapse of a several days elapse from the die release, and shapes become different between immediately after press forming and after several days.

Such a shape change with the lapse of a time unit of the press formed part seems to be similar to a phenomenon in which structural members that keep receiving a high press load from the outside gradually deform in a manner of a creep phenomenon (for example, Patent Literature 3). However, a shape change generated in a press formed part not receiving a press load from the outside has not been known until now.

Furthermore, the second stage (springback analysis) in the conventional press forming simulation predicts a shape of a press formed part immediately after springback at the moment of a die release from a tool of press forming. For this reason, prediction of a shape change, for example, after the lapse of a several days has not been studied at all with respect to a spring-back press formed part that is an object of the present application. In addition, the shape change of the spring-back press formed part with the lapse of a time unit is generated without the press load from the outside as described above. Thus, even when an attempt is made to predict the shape change of the press formed part with the lapse of the time unit, it is not possible to apply an analysis method that handles a shape change due to the creep phenomenon.

The present invention has been made in view of the above problems, and an object thereof is to provide a shape change prediction method of a press formed part in which method a shape change of the press formed part with the lapse of a time unit after springback at the moment of a die release from a tool of press forming is predicted with respect to the press formed part having a U-shaped cross-sectional shape or a Z-shaped cross-sectional shape and having a shape curved in a longitudinal direction in a top view.

### Solution to Problem

A shape change prediction method of a press formed part according to a first aspect of the present invention predicts a shape change in which an end side in a longitudinal direction is twisted due to stress relaxation with a lapse of time after springback at a moment of die release from a tool of press forming with respect to the press formed part having a U-shaped cross-sectional shape including a top portion and a pair of side wall portions continuous from the top portion and having a shape curved in the longitudinal direction in a top view, and includes: a shape/residual stress immediately after the springback acquisition step of acquiring a shape and a residual stress of the press formed part immediately after the springback by a springback analysis of the press formed part; a residual stress relaxation and reduction setting step of setting a value of stress relaxed and reduced compared to the residual stress immediately after the springback for at least one of the pair of side wall portions of the press formed part immediately after the springback; and a residual stress relaxation shape analysis step of acquiring a shape with which moment of force is balanced for the press formed part in which the value of the relaxed and reduced stress is set.

A shape change prediction method of a press formed part according to a second aspect of the present invention predicts a shape change in which an end side in a longitudinal direction is twisted due to stress relaxation with a lapse of time after springback at a moment of die release from a tool of press forming with respect to the press formed part having a Z-shaped cross-sectional shape including a top portion, a side wall portion continuous from the top portion, and a flange portion continuous from the side wall portion and having a shape curved in the longitudinal direction in a top view, and includes: a shape/residual stress immediately after the springback acquisition step of acquiring a shape and a residual stress of the press formed part immediately after the springback by a springback analysis of the press formed part; a residual stress relaxation and reduction setting step of setting a value of stress relaxed and reduced compared to the residual stress immediately after the springback for at least the top portion and/or the flange portion of the press formed part immediately after the springback; and a residual stress relaxation shape analysis step of acquiring a shape with which moment of force is balanced for the press formed part in which the value of the relaxed and reduced stress is set.

In the residual stress relaxation and reduction setting step, the value of stress relaxed and reduced by 5% or more as compared with the residual stress immediately after the springback may be set.

A blank to be used for press forming of the press formed part may be a metal sheet having a tensile strength of a 150 MPa-grade or more and a 2000 MPa-grade or less. Advantageous Effects of Invention

According to the present invention, with respect to a press formed part having a U-shaped cross-sectional shape or a Z-shaped cross-sectional shape and having a shape curved in a longitudinal direction in a top view, it is possible to accurately predict a shape change in which an end portion in the longitudinal direction of the press formed part is twisted with the lapse of time after a die release from a tool of press forming and springback. As a result, it is possible to acquire a press formed part having better dimensional accuracy than before in a manufacturing process of automotive parts, an automotive body, or the like, and to greatly improve manufacturing efficiency.

### Brief Description of Drawings

FIG. 1 is a flowchart illustrating a flow of processing of a shape change prediction method of a press formed part according to a first embodiment of the present invention.
FIG. 2 is a view illustrating an example of a press formed part having a U-shaped cross-sectional shape and having a shape curved in a longitudinal direction in a top view, the press formed part being an object of the first embodiment of the present invention ((a) perspective view, and (b) top view).

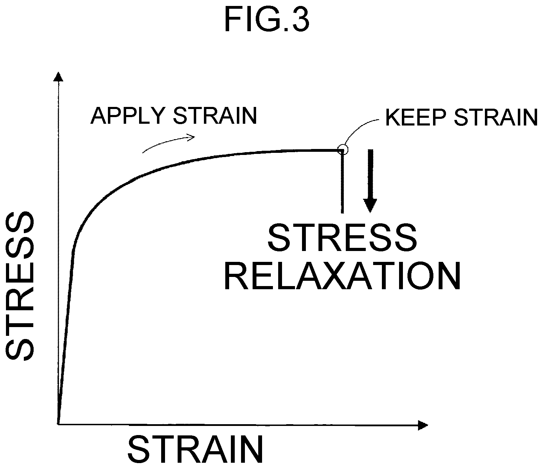

FIG. 3 is a view for describing a stress relaxation phenomenon in which stress is relaxed and reduced with the lapse of time in a state in which a strain is applied and then kept constant.

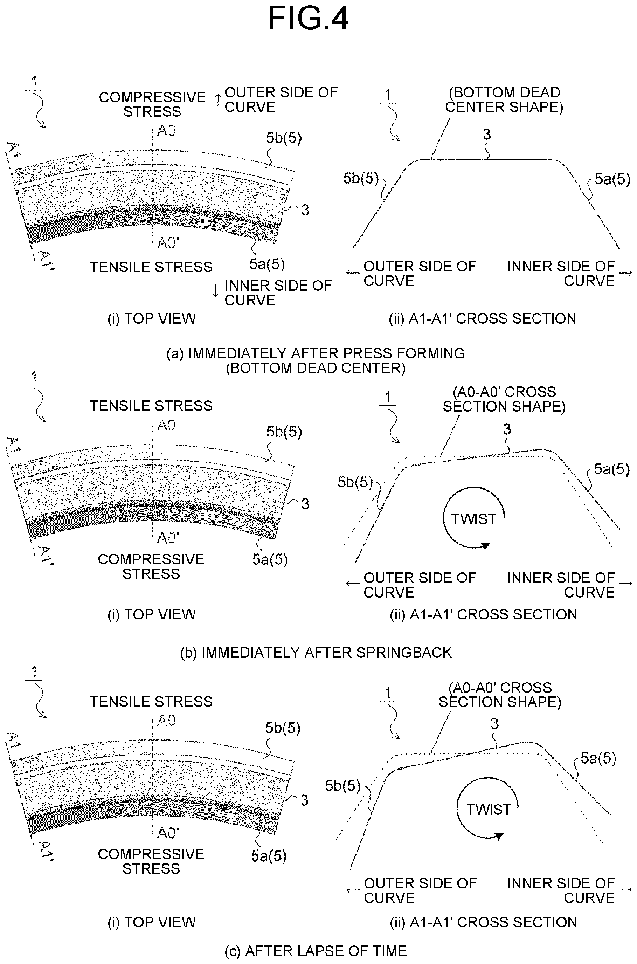

FIG. 4 is a view for describing a shape change due to stress relaxation in a pair of side wall portions of the press formed part that has the U-shaped cross-sectional shape and that is illustrated in FIG. 2 ((a) bottom dead center immediately after press forming, (b) immediately after springback, and (c) after the lapse of time).
FIG. 5 is a view illustrating an example of a press formed part having a Z-shaped cross-sectional shape and having a shape curved in a longitudinal direction in the top view, the press formed part being an object of a second embodiment of the present invention ((a) perspective view, and (b) top view).

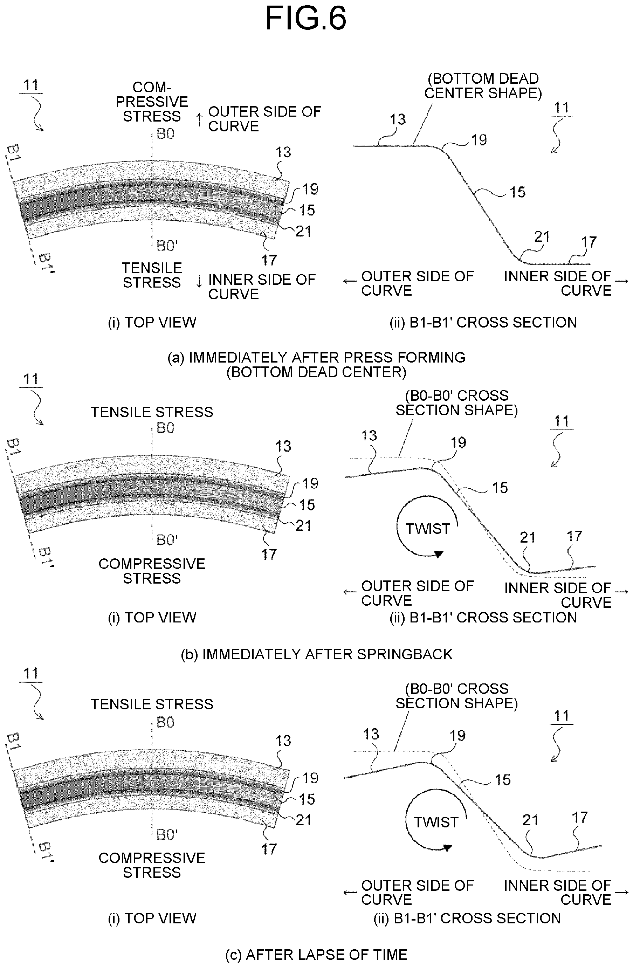

FIG. 6 is a view for describing a shape change due to stress relaxation in a top portion and a flange portion of the press formed part that has the Z-shaped cross-sectional shape and that is illustrated in FIG. 5 ((a) bottom dead center immediately after press forming, (b) immediately after springback, and (c) after the lapse of time).

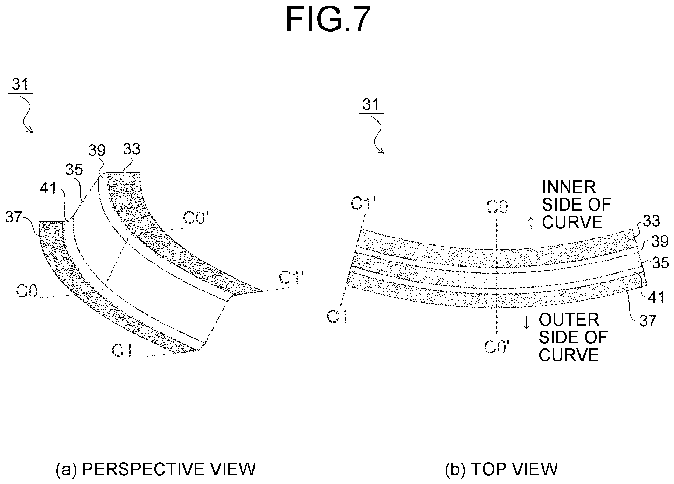

FIG. 7 is a view illustrating another example of a press formed part having a Z-shaped cross-sectional shape and having a shape curved in the longitudinal direction in the top view, the press formed part being an object of the second embodiment of the present invention ((a) perspective view, and (b) top view).

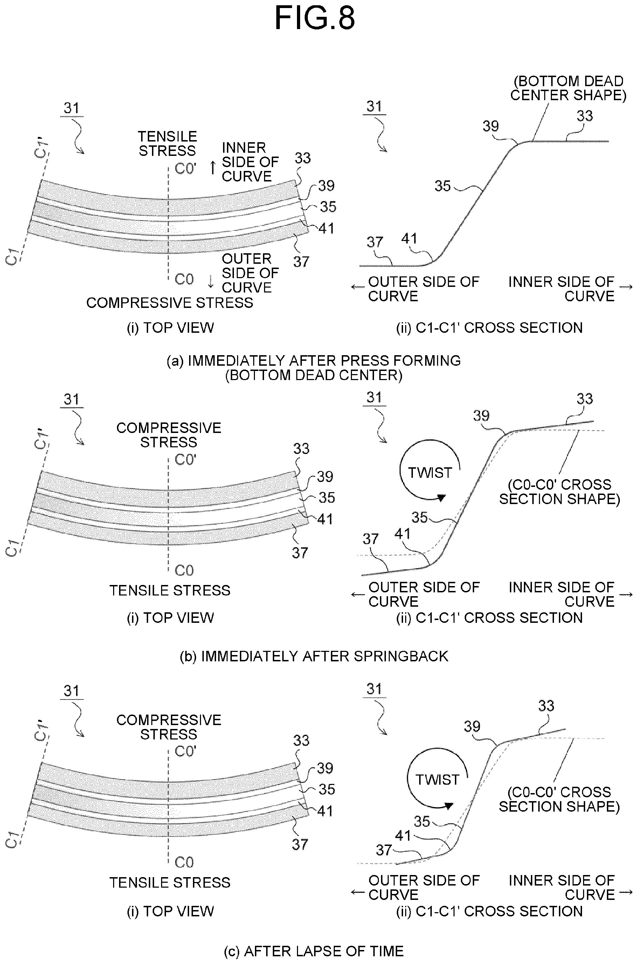

FIG. 8 is a view for describing a shape change due to stress relaxation in the flange portion and the top portion of the press formed part that has the Z-shaped cross-sectional shape and that is illustrated in FIG. 7 ((a) bottom dead center immediately after press forming, (b) immediately after springback, and (c) after the lapse of time).

### Description of Embodiments

### [First embodiment]

A shape change prediction method of a press formed part according to the first embodiment of the present invention predicts, with respect to a press formed part 1 having a U-shaped cross-sectional shape and having a shape curved in a longitudinal direction in a top view as illustrated in FIG. 2 as an example, a shape change in which an end side in the longitudinal direction is twisted due to stress relaxation with the lapse of time after a die release from a tool of press forming and springback, the method including, as illustrated in FIG. 1, a shape/residual stress acquisition step immediately after the springback S1, a residual stress relaxation and reduction setting step S3, and a residual stress relaxation shape analysis step S5.

Prior to description of each of these steps, the reason why the shape change in which the end side in the longitudinal direction is twisted with the further lapse of time after the springback at the moment of the die release from the tool of press forming is generated will be described with respect to the press formed part 1 that is an object of shape prediction in the first embodiment.

### <Shape change with the lapse of time in a press formed part having a U-shaped cross-sectional shape>

As illustrated as an example in FIG. 2, the press formed part 1 that is an object in the present first embodiment has a U-shaped cross-sectional shape including a top portion 3 and a pair of side wall portions 5 continuous from the top portion 3, and has a shape curved in a longitudinal direction in a top view. Furthermore, the top portion 3 and the side wall portions 5 are continuous via a punch shoulder R portion 7. In addition, the pair of side wall portions 5 includes a side wall portion 5a located on an inner side of the curve and a side wall portion 5b located on an outer side of the curve. Note that the inner side of the curve is on the same side as a center of curvature of the curve in the top view, and the outer side of the curve is on the opposite side of the center of curvature of the curve in the top view (the same applies hereinafter.).

As a result of examining the shape change with the lapse of time after the springback with respect to the press formed part 1, the inventors have paid attention to a stress relaxation phenomenon in which stress is gradually relaxed with the lapse of time in a state in which a strain is applied and kept constant as illustrated in a stress-strain diagram of FIG. 3. Then, it has found that, in the press formed part 1 after the springback, residual stresses of the side wall portion 5a on the inner side of the curve and the side wall portion 5b on the outer side of the curve are gradually relaxed with the lapse of time and a shape balanced with a moment of force of the press formed part 1 is changed.

The shape change caused by the relaxation of the residual stress in the press formed part 1 will be described with reference to the schematic diagram illustrated in FIG. 4. In FIG. 4(b)(ii) and FIG. 4(c)(ii), a solid line indicates a shape of an A1-A1' cross section at an end portion in the longitudinal direction of the press formed part 1, and a broken line indicates a shape of an A0-A0' cross section at a middle portion in the longitudinal direction of the press formed part 1.

In press forming of the press formed part 1, a metal sheet (blank) is curved into a shape curved in the top view as illustrated in FIG. 2. Thus, at the bottom dead center, as illustrated in FIG. 4(a)(i), a stretch flange deformation in which a line length of a blank end portion stretches is generated and a tensile stress is generated in the side wall portion 5a on the inner side of the curve, and a shrink flange deformation in which a line length of the blank end portion shrinks is generated and a compressive stress is generated in the side wall portion 5b on the outer side of the curve.

Then, when the press formed part 1 is taken out from the tool of press forming, springback is generated with a residual stress generated during the press forming as driving force. In this springback, the side wall portion 5a on the inner side of the curve tries to shrink, and the side wall portion 5b on the outer side of the curve tries to stretch. However, an in-plane deformation such as shrinkage of the side wall portion 5a or stretch of the side wall portion 5b is not likely to be generated due to large stiffness. Thus, as illustrated in FIG. 4(b)(ii), a twist is generated on the end side in the longitudinal direction with respect to the middle portion in the longitudinal direction of the press formed part 1. Then, absolute values of the residual stresses generated in the side wall portion 5a on the inner side of the curve and the side wall portion 5b on the outer side of the curve at the bottom dead center (tensile stress and compressive stress illustrated in FIG. 4(a)(i)) become small, or the residual stresses are reversed from those at the bottom dead center and a shape with which the moment of force is balanced is acquired in some cases as illustrated in FIG. 4(b)(i).

Subsequently, the residual stress in the side wall portion 5a on the inner side of the curve (compressive stress in FIG. 4(b)(i)) and the residual stress in the side wall portion 5b on the outer side of the curve (tensile stress in FIG. 4(b)(i)) immediately after the springback are relaxed and reduced with the lapse of time without being forced from the outside. As a result, since the shape balanced with the moment of force changes, a twist is further generated at the end portion in the longitudinal direction of the press formed part 1 as illustrated in FIG. 4(c) (ii) .

As described above, the following knowledge has been acquired. That is, in the press formed part 1 having the U-shaped cross-sectional shape and having the curved shape in the top view, due to relaxation of the residual stresses of the side wall portion 5a on the inner side of the curve and the side wall portion 5b on the outer side of the curve with the lapse of further time after the press forming and the springback, a twist is generated on the end side in the longitudinal direction and a shape further deviated from a bottom dead center shape (FIG. 4(a)(ii)) is acquired.

Thus, on the basis of the above new knowledge, the inventors have studied a method of predicting the shape change of the press formed part 1 due to the stress relaxation with the lapse of time after the springback. As a result, the following has been found. That is, it is possible to predict the shape change (twist on the end side in the longitudinal direction) of the press formed part 1 with the lapse of time as described above by further performing an analysis in a third stage in which analysis the residual stress of at least the side wall portion 5a on the inner side of the curve and/or the side wall portion 5b on the outer side of the curve of the press formed part 1 immediately after the spring back, which is acquired in the second stage (springback analysis) of the press forming simulation described above, is relaxed and a shape balanced with the moment of the force of the press formed part 1 is acquired.

### <Shape change prediction method of a press formed part>

Next, the shape/residual stress acquisition step immediately after springback S1, the residual stress relaxation and reduction setting step S3, and the residual stress relaxation shape analysis step S5 in the shape change prediction method of a press formed part according to the present first embodiment (FIG. 1) will be described.

### <<Shape/residual stress acquisition step immediately after springback>>

The shape/residual stress acquisition step immediately after the springback S1 is a step of acquiring a shape and a residual stress of the press formed part 1 immediately after the springback by the springback analysis of the press formed part 1.

As an example of specific processing of acquiring the shape and the residual stress of the press formed part 1 immediately after the springback, there is a press forming simulation by a finite element method which simulation includes a first stage of performing a press forming analysis in a process of press forming a metal sheet up to a bottom dead center by using a model of a tool of press forming, which model is acquired by modeling of the tool of press forming of the actual press formed part 1, and acquiring the shape and the residual stress of the press formed part 1 at the bottom dead center, and a second stage of performing a springback analysis of acquiring the shape and the residual stress with which the moment of force of the press formed part 1, after the acquired press formed part 1 at the bottom dead center is die-released from the model of a tool of press forming, can be balanced.

### <<Residual stress relaxation and reduction setting step>>

The residual stress relaxation and reduction setting step S3 is a step of setting a value of stress, which is relaxed and reduced compared to the residual stress immediately after the springback, to at least one of the pair of side wall portions 5 of the press formed part 1 immediately after the springback, which is acquired in the shape/residual stress acquisition step immediately after the springback S1.

Here, the residual stress in the residual stress relaxation and reduction setting step S3 means the tensile stress and the compressive stress remaining in the press formed part 1 immediately after the springback. Furthermore, as described above, the pair of side wall portions 5 mean the side wall portion 5a on the inner side of the curve and the side wall portion 5b on the outer side of the curve. Furthermore, the value of the stress acquired by relaxation and reduction of the residual stress in the residual stress relaxation and reduction setting step S3 means a value acquired by relaxation and reduction of each of absolute values of the compressive stress (negative value) remaining in the side wall portion 5a on the inner side of the curve and the tensile stress (positive value) remaining in the side wall portion 5b on the outer side of the curve in the press formed part 1 immediately after the springback.

### <<Residual stress relaxation shape analysis step>>

The residual stress relaxation shape analysis step S5 is a step of performing an analysis to acquire a shape with which the moment of force is balanced for the press formed part 1 in which the value of the stress relaxed and reduced in the residual stress relaxation and reduction setting step S3 is set.

In the analysis in the residual stress relaxation shape analysis step S5, by application of an analysis method similar to the spring back analysis in the shape/residual stress acquisition step immediately after the springback S1, the shape and the residual stress of the press formed part 1 after setting of the value of the stress in which the residual stress is relaxed and reduced can be acquired.

As described above, according to the shape change prediction method of the press formed part according to the present first embodiment, the value of the stress relaxed and reduced from the residual stress immediately after the springback is set for at least one of the side wall portion 5a on the inner side of the curve and the side wall portion 5b on the outer side of the curve of the press formed part 1 immediately after the springback, which is acquired by the springback analysis, and the shape balanced with the moment of force is acquired for the press formed part 1 in which the value of the relaxed and reduced stress is set. As a result, it is possible to simulate the stress relaxation and the shape change with the lapse of time in the actual press formed part 1 and to predict the shape change in which the end side in the longitudinal direction of the press formed part 1 is twisted with the lapse of time after the die release from the tool of press forming and the springback.

Note that in the above description, in the residual stress relaxation and reduction setting step S3, the value of the stress acquired by relaxation and reduction of the residual stress of each portion is set for at least one of the side wall portion 5a on the inner side of the curve or the side wall portion 5b on the outer side of the curve in the press formed part 1, that is, at least the side wall portion 5a and/or the side wall portion 5b.

However, in the present first embodiment, in the residual stress relaxation and reduction setting step S3, the residual stress immediately after the springback may be set as it is or the value of the stress in which the residual stress is relaxed and reduced may be set for portions other than the side wall portion 5a on the inner side of the curve and the side wall portion 5b on the outer side of the curve in the press formed part 1. In addition, the value of the stress acquired by relaxation and reduction of the residual stress may be set for the entire press formed part 1. Furthermore, in the residual stress relaxation and reduction setting step S3, a ratio and a value for relaxation and reduction of the residual stress may be changed for each portion such as the side wall portion 5a on the inner side of the curve or the side wall portion 5b on the outer side of the curve.

### [Second embodiment]

A shape change prediction method of a press formed part according to the second embodiment of the present invention predicts, with respect to a press formed part 11 having a Z-shaped cross-sectional shape and having a shape curved in a longitudinal direction in a top view as illustrated in FIG. 5 as an example, a shape change in which an end side in the longitudinal direction is twisted due to stress relaxation with the lapse of time after a die release from a tool of press forming and springback, the method including, similarly to the above-described first embodiment (see FIG. 1), a shape/residual stress acquisition step immediately after the springback, a residual stress relaxation and reduction setting step, and a residual stress relaxation shape analysis step.

Prior to description of each of these steps, the reason why the shape change, in which the end side in the longitudinal direction is twisted with the further lapse of time after the springback at the moment of the die release from the tool of press forming, is generated will be described with respect to the press formed part 11 that is an object of shape prediction in the present second embodiment.

### <Shape change with the lapse of time in a press formed part having a Z-shaped cross-sectional shape (part 1)>

As illustrated in FIG. 5, the press formed part 11 that is an object of the present second embodiment has a Z-shaped cross-sectional shape including a top portion 13, a side wall portion 15 continuous from the top portion 13, and a flange portion 17 continuous from the side wall portion 15, and includes a shape curved in a longitudinal direction in a top view. In addition, the top portion 13 and the side wall portion 15 are continuous via a punch shoulder R portion 19, and the side wall portion 15 and the flange portion 17 are continuous via a die shoulder R portion 21. Furthermore, the flange portion 17 is located on an inner side of the curve, and the top portion 13 is located on an outer side of the curve.

Also for such a press formed part 11, the reason why the shape change is generated with the lapse of time has been studied with attention being on the stress relaxation phenomenon illustrated in FIG. 3 similarly to the first embodiment described above. As a result, it has found that, in the press formed part 11 after the springback, the residual stress of the flange portion 17 on the inner side of the curve and the top portion 13 on the outer side of the curve is gradually relaxed with the lapse of time and a shape balanced with moment of force of the press formed part 11 is changed.

The shape change caused by the relaxation of the residual stress in the press formed part 11 will be described with reference to the schematic diagram illustrated in FIG. 6. In FIG. 6(b) (ii) and FIG. 6(c) (ii), a solid line indicates a shape of a B1-B1' cross section at an end portion in the longitudinal direction of the press formed part 11, and a broken line indicates a shape of a B0-B0' cross section at a middle portion in the longitudinal direction of the press formed part 11.

In the press forming of the press formed part 11, a metal sheet (blank) is curved into a curved shape in the top view as illustrated in FIG. 5. Thus, at the bottom dead center, as illustrated in FIG. 6(a)(i), a stretch flange deformation in which a line length of a blank end portion stretches is generated in the flange portion 17 on the inner side of the curve and a tensile stress is generated, and a shrink flange deformation in which a line length of the blank end portion shrinks is generated in the top portion 13 on the outer side of the curve and a compressive stress is generated.

Then, when the press formed part 11 is taken out from the tool of press forming, springback is generated with the residual stress generated during the press forming as driving force. In this springback, the flange portion 17 on the inner side of the curve tries to shrink, and the top portion 13 on the outer side of the curve tends to stretch. However, an in-plane deformation such as shrinkage of the flange portion 17 and stretch of the top portion 13 is hardly generated due to high stiffness, and thus a twist is generated at the end side in the longitudinal direction with respect to the middle portion in the longitudinal direction of the press formed part 11 as illustrated in FIG. 6(b) (ii). Then, absolute values of the residual stresses generated in the flange portion 17 on the inner side of the curve and the top portion 13 on the outer side of the curve at the bottom dead center (tensile stress and compressive stress illustrated in FIG. 6(a)(i)) become small, or the residual stresses are reversed from those at the bottom dead center and a shape with which the moment of force is balanced is acquired in some cases as illustrated in FIG. 6(b)(i).

Subsequently, the residual stress in the flange portion 17 on the inner side of the curve (compressive stress in FIG. 6(b)(i)) and the residual stress in the top portion 13 on the outer side of the curve (tensile stress in FIG. 6(b)(i)) immediately after the springback are relaxed and reduced with the lapse of time without being forced from the outside. As a result, since the shape balanced with the moment of force changes, as illustrated in FIG. 6(c) (ii), a twist is further generated at the end portion in the longitudinal direction of the press formed part 11.

As described above, in the press formed part 11 having the Z-shaped cross-sectional shape and having the curved shape in the top view, due to the relaxation of the residual stresses of the flange portion 17 on the inner side of the curve and the top portion 13 on the outer side of the curve with the lapse of further time after the press forming and the springback, a twist is generated on the end side in the longitudinal direction and a shape further deviated from the bottom dead center shape (FIG. 6(a)(ii)) is acquired.

As a result, the inventors have found the following. That is, similarly to the first embodiment described above, it is possible to predict the shape change (twist of the end portion in the longitudinal direction) of the press formed part 11 with the lapse of time as described above by further performing an analysis in a third stage in which analysis the residual stress of at least the flange portion 17 on the inner side of the curve and/or the top portion 13 on the outer side of the curve of the press formed part 11 immediately after the spring back, which is acquired in the second stage (springback analysis) of the press forming simulation described above, is relaxed and the shape balanced with the moment of the force of the press formed part 11 is acquired.

### <Shape change prediction method of a press formed part>

Next, the shape/residual stress acquisition step immediately after springback, the residual stress relaxation and reduction setting step, and the residual stress relaxation shape analysis step in the shape change prediction method of the press formed part according to the second embodiment of the present invention will be described.

### <<Shape/residual stress acquisition step immediately after springback>>

The shape/residual stress acquisition step immediately after the springback is a step of acquiring a shape and a residual stress of the press formed part 11 immediately after the springback by a springback analysis of the press formed part 11.

### <<Residual stress relaxation and reduction setting step>>

The residual stress relaxation and reduction setting step is a step of setting a value of stress, which is relaxed and reduced compared to the residual stress immediately after the springback, for at least one of the flange portion 17 and/or the top portion 13 of the press formed part 11 immediately after the springback, which is acquired in the shape/residual stress acquisition step immediately after the springback.

### <<Residual stress relaxation shape analysis step>>

The residual stress relaxation shape analysis step is a step of performing an analysis to acquire a shape with which the moment of force is balanced for the press formed part 11 in which the value of the stress relaxed and reduced in the residual stress relaxation and reduction setting step is set.

As described above, according to the shape change prediction method of the press formed part according to the present second embodiment, the value of the stress relaxed and reduced compared to the residual stress immediately after the springback is set for at least the flange portion 17 and/or the top portion 13 of the press formed part 11 immediately after the springback, which is acquired by the springback analysis, and the analysis of acquiring the shape balanced with the moment of force is performed for the press formed part 11 in which the value of the relaxed and reduced stress is set. As a result, it is possible to simulate the stress relaxation and the shape change with the lapse of time in the actual press formed part 11 and to predict the shape change in which the end side in the longitudinal direction of the press formed part 11 is twisted with the lapse of time after the die release from the tool of press forming and the springback.

As illustrated as an example in FIG. 5, the press formed part 11 having the flange portion 17 located on the inner side of the curve and the top portion 13 located on the outer side of the curve is the object of the above description according to the present second embodiment as the press formed part having the Z-shaped cross-sectional shape and curved in the top view.

However, the shape change prediction method of the press formed part according to the second embodiment may be anything as long as the object is a press formed part having the Z-shaped cross-sectional shape and curved in the top view, and a press formed part 31 having a Z-shaped cross-sectional shape and including a top portion 33 on an inner side of a curve and a flange portion 37 on an outer side of the curve can be an object as illustrated in FIG. 7 as another example.

### <Shape change with the lapse of time in a press formed part having a Z-shaped cross-sectional shape (part 2) >

As illustrated in FIG. 7, the press formed part 31 has the Z-shaped cross-sectional shape including the top portion 33, a side wall portion 35 continuous from the top portion 33, and the flange portion 37 continuous from the side wall portion 35, and has a shape curved in a longitudinal direction in a top view. In addition, the top portion 33 and the side wall portion 35 are continuous via a punch shoulder R portion 39, and the side wall portion 35 and the flange portion 37 are continuous via a die shoulder R portion 41. Then, the top portion 33 and the flange portion 37 are opposite to the top portion 13 and the flange portion 17 of the press formed part 11 illustrated in FIG. 5 in a positional relationship between the inner side of the curve and the outer side of the curve.

As for such a press formed part 31, as in the stress relaxation phenomenon illustrated in FIG. 3 described above, it can be described that the residual stress of the top portion 33 on the inner side of the curve and the flange portion 37 on the outer side of the curve is gradually relaxed with the lapse of time and the shape change in which the end side in the longitudinal direction of the press formed part 31 is twisted is generated as illustrated in FIG. 8. Note that in FIG. 8(b)(ii) and FIG. 8(c)(ii), a solid line indicates a shape of a C1-C1' cross section at an end portion in the longitudinal direction of the press formed part 31, and a broken line indicates a shape of a C0-C0' cross section at a middle portion in the longitudinal direction of the press formed part 31.

When the press formed part 31 formed up to the bottom dead center is die-released from the tool of press forming as illustrated in FIG. 8(a)(i), the springback is generated, and an absolute value of the residual stresses of the top portion 33 on the inner side of the curve and the flange portion 37 on the outer side of the curve (compressive stress and tensile stress illustrated in FIG. 8(a)(i)) become small, or the residual stresses are reversed from those at the bottom dead center and a shape with which the moment of force is balanced is acquired in some cases as illustrated in FIG. 8(b)(i). As a result, as illustrated in FIG. 8(b)(ii), a twist is generated on the end side in the longitudinal direction with respect to the middle portion in the longitudinal direction of the press formed part 31.

Subsequently, the residual stress in the top portion 33 on the inner side of the curve (compressive stress in FIG. 8(b)(i)) and the residual stress in the flange portion 37 on the outer side of the curve (tensile stress in FIG. 8(b)(i)) immediately after the springback are relaxed and reduced with the lapse of time without being forced from the outside. As a result, since the shape balanced with the moment of force changes, a twist is further generated at the end portion in the longitudinal direction of the press formed part 31 as illustrated in FIG. 8(c) (ii) .

As described above, also in the press formed part 31 having the Z-shaped cross-sectional shape including the top portion 33 on the inner side of the curve and the flange portion 37 on the outer side of the curve, due to relaxation of the residual stresses of the top portion 33 and the flange portion 37 with the lapse of further time after the press forming and the springback, the shape change in which the end side in the longitudinal direction is twisted is generated and a shape further deviated from the bottom dead center shape (FIG. 8(a)(ii)) is acquired.

Thus, even in a case of predicting the shape change of the press formed part 31 with the lapse of time, it is possible to predict the shape change of the press formed part 31 in which shape change the end side in the longitudinal direction is twisted due to the stress relaxation with the lapse of time after the die release from the tool of press forming and the springback by performing the shape/residual stress acquisition step immediately after the springback, the residual stress relaxation and reduction setting step, and the residual stress relaxation shape analysis step on the press formed part 31. Here, in the residual stress relaxation and reduction setting step, a value of stress that is relaxed and reduced compared to the residual stress immediately after the springback is set for at least the flange portion 37 and/or the top portion 33 of the press formed part 31 immediately after the springback.

Note that in the present second embodiment, the method described in the first embodiment is applied to the springback analysis in the shape/residual stress acquisition step immediately after the spring back and the analysis in the residual stress relaxation shape analysis step.

Furthermore, in the present second embodiment, when the press formed part 11 having the Z-shaped cross-sectional shape is the object of the residual stress relaxation and reduction setting step, for example, the residual stress immediately after the springback may be set as it is or a value of stress acquired by relaxation and reduction of the residual stress may be set for portions other than the flange portion 17 and the top portion 13. In addition, the value of the stress acquired by relaxation and reduction of the residual stress may be set for the entire press formed part 11. Furthermore, in the residual stress relaxation and reduction setting step, a ratio and a value for relaxation and reduction of the residual stress may be changed for each portion such as the flange portion or the top portion.

Note that in the present invention, in either the press formed part having the U-shaped cross-sectional shape (FIG. 2) or the press formed part having the Z-shaped cross-sectional shape (FIG. 5 and FIG. 7), in the residual stress relaxation and reduction setting step, setting the value of the stress relaxed and reduced by 5% or more as compared with the residual stress immediately after the springback enables excellent prediction of the shape change after the lapse of time and is preferable.

In addition, objects of the above description are the press formed parts having a shape curved in the top view over the entire length in the longitudinal direction although the cross-sectional shapes thereof are different. An object of the present invention only needs to be a press formed part in which a part of portions in the longitudinal direction is curved in the longitudinal direction in the top view, and a press formed part including a curved portion and a side portion linearly extending from an end of a curve of the curved portion to both sides or one side on an outer side in the longitudinal direction can be an object, for example.

In the shape change prediction method of a press formed part according to the present invention, although a blank (metal sheet) used for press forming and a shape and a type of the press formed part are not specifically limited, the method is more effective for automotive parts press-formed by utilization of a metal sheet with which a residual stress of the press formed part becomes high.

Specifically, the thickness of the blank is preferably 0.5 mm or more and 4.0 mm or less. In addition, the tensile strength of the blank is preferably a 150 MPa-grade or more and a 2000 MPa-grade or less, and is more preferably a 440 MPa-grade or more and a 1470 MPa-grade or less.

Since a metal sheet having a tensile strength less than the 150 MPa-grade is hardly used for a press formed part, there is little advantage of using the shape change prediction method of a press formed part according to the present invention. For a part having low stiffness, such as an outer plate part of an automobile using a metal sheet having the tensile strength of the 150 MPa-grade or more, a shape change due to a change in the residual stress is likely to be received, whereby an advantage of applying the present invention is increased, and thus the present invention can be suitably applied.

On the other hand, a metal sheet having a tensile strength exceeding the 2000 MPa-grade has poor ductility. Thus, for example, in the punch shoulder R portion 7 of the press formed part 1 having the U-shaped cross-sectional shape as illustrated in FIG. 2 or the punch shoulder R portion 19 and the die shoulder R portion 21 of the press formed part 11 having the Z-shaped cross-sectional shape as illustrated in FIG. 5, a fracture is likely to be generated in a press forming process thereof, and press forming cannot be performed in some cases.

Furthermore, as a type of the press formed part, it is preferable that an object is a structural part having a U-shaped cross-sectional shape or a Z-shaped cross-sectional shape curved in a top view, such as a roof side rail or a front pillar upper, and the present invention can be widely used for automotive parts which has a U-shaped cross-sectional shape or a Z-shaped cross-sectional shape, which has a shape curved in a top view, and in which a twist on an end side in the longitudinal direction is generated with the lapse of time after press forming and dimensional accuracy is decreased.

The press forming method of a press formed part to be an object of the present invention is not specifically limited, and is, for example, bending forming, crash forming, or deep drawing.

### [First example]

### <Press formed part having a U-shaped cross-sectional shape>

In the first example, as illustrated in FIG. 2, for the press formed part 1 having the U-shaped cross-sectional shape and curved in the longitudinal direction in the top view, a shape change with the lapse of time after the die release from the tool of press forming and the springback was predicted and validity thereof was verified.

The press formed part 1 includes the top portion 3 and the pair of side wall portions 5. In the top view, the side wall portion 5a is located on the inner side of the curve, and the side wall portion 5b is located on the outer side of the curve. Then, a bottom dead center shape of the press formed part 1 was such that a curvature radius of the curve at a boundary between the side wall portion 5b and the punch shoulder R portion 7 was 540 mm on the outer side of the curve and 490 mm on the inner side of the curve, and a side wall height of the side wall portions 5 in a press forming direction was 50 mm.

In the first example, first, a steel sheet A having mechanical properties illustrated as an example in Table 1 below was used as an example of a metal sheet, and the press formed part 1 was press-formed.

**Table 1**

| | Sheet thickness/mm | Yield strength/MPa | Tensile strength/MPa | Stretch/% |
|---|---|---|---|---|
| Steel sheet A | 1.2 | 690 | 1030 | 15 |

Then, after the press forming up to the bottom dead center, a shape of the press formed part 1 was measured immediately after die release from the tool of press forming and the springback, and after the lapse of three days from the springback, and an inclination of the top portion 3 at the end in the longitudinal direction with respect to the top portion 3 in the middle in the longitudinal direction was actually measured as a torsional angle.

Next, an analysis of predicting the twist of the end in the longitudinal direction of the press formed part 1 with the lapse of time was performed. In the analysis, first, by utilization of a model of a tool of press forming which model is acquired by modeling of the tool of press forming, a press forming analysis in a process of press forming the steel sheet A up to the bottom dead center was performed and a shape and a residual stress of the press formed part 1 at the bottom dead center were acquired.

Subsequently, a springback analysis of acquiring the shape and the residual stress of the press formed part 1 immediately after the press formed part 1 at the bottom dead center was die-released from the model of a tool of press forming was performed.

Furthermore, a value of stress acquired by reduction of an absolute value of the residual stress at a predetermined ratio was set for the side wall portion 5a on the inner side of the curve and/or the side wall portion 5b on the outer side of the curve of the press formed part 1 immediately after the springback, which was acquired by the springback analysis. Then, an analysis of acquiring a shape with which moment of force was balanced was performed on the press formed part 1 in which the residual stress was reduced, and a prediction value of the torsional angle, which was the inclination of the top portion 3 at the end in the longitudinal direction with respect to the top portion 3 in the middle in the longitudinal direction, was acquired.

In the first example, as first to third invention examples, for only the side wall portion 5b on the outer side of the curve or both the side wall portion 5a on the inner side of the curve and the side wall portion 5b on the outer side of the curve of the press formed part 1 acquired by the springback analysis, relaxation and reduction of the residual stress immediately after the springback were performed at a predetermined ratio (stress relaxation reduction rate) and the value of stress was set.

As a comparative object, although the press forming analysis and the springback analysis of the press formed part 1 were performed in the same manner as in the first to third invention examples, the analysis of acquiring the shape, with which the moment of force was balanced, by setting the value of stress acquired by relaxation and reduction of the residual stress was not performed in a first comparative example.

The relaxation reduction rates of the residual stress, and results of an amount of deviation of the torsional angle at the end in the longitudinal direction of the top portion 3 from an actual measurement value in the first invention example to the third invention example and the first comparative example are illustrated in Table 2. Here, the actual measurement value of the torsional angle, which was the inclination of the top portion 3 at the end in the longitudinal direction with respect to the top portion 3 in the middle in the longitudinal direction, was 5.8°.

**Table 2**

| First example | Relaxation reduction rate of residual stress/% | | Amount of deviation of torsional angle | | |
|---|---|---|---|---|---|
| | Side wall portion (outer side of curve) | Side wall portion (inner side of curve) | Prediction value/° | Difference between actual measurement value (after three day) and prediction value/° | Error of prediction value with respect to actual measurement value/% |
| First comparative example | - | - | 4.6 | 1.2 | 20.7 |
| First invention example | 5 | 0 | 5.2 | 0.6 | 10.3 |
| Second invention example | 5 | 5 | 5.6 | 0.2 | 3.4 |
| Third invention example | 10 | 10 | 6.1 | -0.3 | -5.2 |

In Table 2, the prediction value is a prediction value of the torsional angle that is the inclination of the top portion 3 at the end in the longitudinal direction with respect to the top portion 3 in the middle in the longitudinal direction. In addition, a difference between the actual measurement value and the prediction value and an error of the prediction value with respect to the actual measurement value were calculated and described together.

In the first comparative example, the prediction value of the torsional angle was 4.6°, the difference between the actual measurement value and the prediction value was 1.2°, and the error of the prediction value was 20.7%.

In the first invention example, a value of stress in which the residual stress is relaxed and reduced by 5% is set only for the side wall portion 5b on the outer side of the curve. The prediction value increased to 5.2°, the difference between the actual measurement value and the prediction value was 0.6°, and the error of the prediction value was 10.3%, whereby the prediction value became closer to the actual measurement value than the first comparative example.

In the second invention example, a value of stress in which the residual stress is relaxed and reduced by 5% is set for both of the side wall portion 5a on the inner side of the curve and the side wall portion 5b on the outer side of the curve. The prediction value increased to 5.6°, the difference between the actual measurement value and the prediction value was 0.2°, and the error of the prediction value was 3.4%, whereby the prediction value became closer to the actual measurement value than the first comparative example and the first invention example and was well.

In the third invention example, a value of stress in which the residual stress is relaxed and reduced by 10% is set for both of the side wall portion 5a on the inner side of the curve and the side wall portion 5b on the outer side of the curve. The prediction value increased to 6.1°, the difference between the actual measurement value and the prediction value was -0.3°, and the error of the prediction value was -5.2%. Although being negative values, when compared in terms of absolute values, both of the difference and the error were more improved than the first comparative example and the first invention example and were well.

### [Second example]

### <Press formed part having a Z-shaped cross-sectional shape (part 1)>

In the second example, as illustrated in FIG. 5, for the press formed part 11 having the Z-shaped cross-sectional shape and curved in the longitudinal direction in the top view, a shape change with the lapse of time after the die release from the tool of press forming and the springback was predicted and validity thereof was verified.

The press formed part 11 includes the top portion 13, the pair of side wall portions 15, and the flange portion 17. In the top view, the flange portion 17 is located on an inner side of the curve, and the top portion 13 is located on the outer side of the curve. Then, a bottom dead center shape of the press formed part 11 was such that a curvature radius of the curve at a boundary between the side wall portion 15 and the punch shoulder R portion 19 was 600 mm, and a side wall height of the side wall portion 5 in a press forming direction was 80 mm.

In the second example, first, the press formed part 11 was press-formed by utilization of the steel sheet A having the mechanical properties described as an example in Table 1 as an example of a metal sheet.

Then, after the press formed part 11 was press-formed up to the bottom dead center, a shape of the press formed part 11 was measured immediately after die release from the tool of press forming and springback, and after the lapse of three days from the springback, and an inclination of the top portion 13 at the end in the longitudinal direction with respect to the top portion 13 in the middle in the longitudinal direction was actually measured as a torsional angle.

Next, an analysis of predicting the twist of the end in the longitudinal direction of the press formed part 11 with the lapse of time was performed. In the analysis, first, by utilization of a model of a tool of press forming which model is acquired by modeling of the tool of press forming, a press forming analysis in a process of press forming the steel sheet A up to the bottom dead center was performed and a shape and a residual stress of the press formed part 11 at the bottom dead center were acquired.

Subsequently, a springback analysis of acquiring the shape and the residual stress of the press formed part 11 immediately after the press formed part 11 at the bottom dead center was die-released from the model of a tool of press forming was performed.

Furthermore, a value of stress acquired by relaxation and reduction of an absolute value of the residual stress at a predetermined ratio was set for the flange portion 17 on the inner side of the curve and/or the top portion 13 on the outer side of the curve of the press formed part 11 immediately after the springback, which was acquired by the spring back analysis. Then, an analysis of acquiring a shape with which moment of force was balanced was performed on the press formed part 11 in which the residual stress was relaxed and reduced, and a prediction value of the torsional angle, which was the inclination of the top portion 13 at the end in the longitudinal direction with respect to the top portion 13 in the middle in the longitudinal direction, was acquired.

In the second example, as fourth to sixth invention examples, for only the flange portion 17 on the inner side of the curve or both the top portion 13 on the outer side of the curve and the flange portion 17 on the inner side of the curve of the press formed part 11 acquired by the springback analysis, relaxation and reduction of the residual stress immediately after the springback were performed at a predetermined ratio (stress relaxation reduction rate) and the value of stress was set.

In addition, as a comparative object, although the press forming analysis and the springback analysis of the press formed part 11 were performed in the same manner as in the fourth to sixth invention examples, the analysis of acquiring the shape, with which the moment of force was balanced, by setting the value of stress acquired by relaxation and reduction of the residual stress was not performed in a second comparative example.

The relaxation reduction rates of the residual stress, and results of an amount of deviation of the torsional angle at the end in the longitudinal direction of the top portion 13 from an actual measurement value in the fourth invention example to the sixth invention example and the second comparative example are illustrated in Table 3. Here, the actual measurement value of the torsional angle, which was the inclination of the top portion 13 at the end in the longitudinal direction with respect to the top portion 13 in the middle in the longitudinal direction, was 7.7°.

**Table 3**

| Second example | Relaxation reduction rate of residual stress/% | | Amount of deviation of torsional angle | | |
|---|---|---|---|---|---|
| | Top portion (outer side of curve) | Flange portion (inner side of curve) | Prediction value/° | Difference between experimental value (after three day) and prediction value/° | Error of prediction value with respect to experimental value/% |
| Second comparative example | - | - | 6.8 | 0.9 | 11.7 |
| Fourth invention example | 0 | 10 | 7.0 | 0.7 | 9.1 |
| Fifth invention example | 10 | 10 | 7.4 | 0.3 | 3.9 |
| Sixth invention example | 20 | 20 | 8.0 | -0.3 | -3.9 |

In Table 3, the prediction value is a prediction value of the torsional angle that is the inclination of the top portion 13 at the end in the longitudinal direction with respect to the top portion 13 in the middle in the longitudinal direction. In addition, a difference between the actual measurement value and the prediction value and an error of the prediction value with respect to the actual measurement value were calculated and described together.

In the second comparative example, the prediction value of the torsional angle was 6.8°, the difference between the actual measurement value and the prediction value was 0.9°, and the error of the prediction value was 11.7%.

In the fourth invention example, a value of stress in which the residual stress is relaxed and reduced by 10% is set only for the flange portion 17 on the inner side of the curve. The prediction value increased to 7.0°, the difference between the actual measurement value and the prediction value was 0.7°, and the error of the prediction value was 9.1%, whereby the prediction value became closer to the actual measurement value than the second comparative example.

In the fifth invention example, a value of stress in which the residual stress is relaxed and reduced by 10% is set for both the top portion 13 on the outer side of the curve and the flange portion 17 on the inner side of the curve. The prediction value increased to 7.4°, the difference between the actual measurement value and the prediction value was 0.3°, and the error of the prediction value was 3.9%, whereby the prediction value became closer to the actual measurement value than the second comparative example and the fourth invention example and was well.

In the sixth invention example, a value of stress in which the residual stress is relaxed and reduced by 20% is set for both the top portion 13 on the outer side of the curve and the flange portion 17 on the inner side of the curve. The prediction value increased to 8.0°, the difference between the actual measurement value and the prediction value was -0.3°, and the error of the prediction value was -3.9%. Although being negative values, when compared in terms of absolute values, both of the difference and the error were more improved than the second comparative example and the fourth invention example and were as good as the fifth invention example.

### [Third example]

### <Press formed part having a Z-shaped cross-sectional shape (part 2)>

In the third example, as illustrated in FIG. 7, for the press formed part 31 having the Z-shaped cross-sectional shape and curved in the longitudinal direction in the top view, a shape change with the lapse of time after the die release from the tool of press forming and the springback was predicted and validity thereof was verified.

As illustrated in FIG. 7, the press formed part 31 includes the top portion 33, the side wall portion 35, and the flange portion 37. In the top view, the top portion 33 is located on the inner side of the curve, and the flange portion 37 is located on the outer side of the curve. Then, a bottom dead center shape of the press formed part 31 was such that a curvature radius of the curve at a boundary between the side wall portion 35 and the punch shoulder R portion 39 was 800 mm, and a side wall height of the side wall portion 5 in a press forming direction was 60 mm.

In the third example, first, the press formed part 31 was press-formed by utilization of the steel sheet A having the mechanical properties described as an example in Table 1 as an example of a metal sheet.

Then, after the press formed part 31 was press-formed up to the bottom dead center, a shape of the press formed part 31 was measured immediately after die release from the tool of press forming and springback, and after the lapse of three days from the springback, and an inclination of the top portion 33 at the end in the longitudinal direction with respect to the top portion 33 in the middle in the longitudinal direction was actually measured as a torsional angle.

Next, an analysis of predicting the twist of the end in the longitudinal direction of the press formed part 31 with the lapse of time was performed. In the analysis, first, by utilization of a model of a tool of press forming which model is acquired by modeling of the tool of press forming, a press forming analysis in a process of press forming the steel sheet A up to the bottom dead center was performed and a shape and a residual stress of the press formed part 31 at the bottom dead center were acquired.

Subsequently, a springback analysis of acquiring the shape and the residual stress of the press formed part 31 immediately after the press formed part 31 at the bottom dead center was die-released from the model of a tool of press forming was performed.

Furthermore, a value of stress acquired by relaxation and reduction of an absolute value of the residual stress at a predetermined ratio was set for the top portion 33 on the inner side of the curve and/or the flange portion 37 on the outer side of the curve of the press formed part 31 immediately after the springback, which was acquired by the spring back analysis. Then, an analysis of acquiring a shape with which moment of force was balanced was performed on the press formed part 31 in which the residual stress was relaxed, and a prediction value of the torsional angle, which was the inclination of the top portion 33 at the end in the longitudinal direction with respect to the top portion 33 in the middle in the longitudinal direction, was acquired.

In the third example, as seventh to ninth invention examples, for only the flange portion 37 on the outer side of the curve or both the flange portion 37 on the outer side of the curve and the top portion 33 on the inner side of the curve of the press formed part 31 acquired by the springback analysis, relaxation and reduction of the residual stress immediately after the springback were performed at a predetermined ratio (stress relaxation reduction rate) and the value of stress was set.

In addition, as a comparative object, although the press forming analysis and the springback analysis of the press formed part 31 were performed in the same manner as in the seventh to ninth invention examples, the analysis of acquiring the shape, with which the moment of force was balanced, by setting the value of stress acquired by relaxation and reduction of the residual stress was not performed in a third comparative example.

The relaxation reduction rates of the residual stress, and results of an amount of deviation of the torsional angle at the end in the longitudinal direction of the top portion 33 from an actual measurement value in the seventh invention example to the ninth invention example and the third comparative example are illustrated in Table 4. Here, the actual measurement value of the torsional angle, which was the inclination of the top portion 33 at the end in the longitudinal direction with respect to the top portion 33 in the middle in the longitudinal direction, was 7.8°.

**Table 4**

| Third example | Relaxation reduction rate of residual stress/% | | Amount of deviation of torsional angle | | |
|---|---|---|---|---|---|
| | Flange portion (outer side of curve) | Top portion (inner side of curve) | Prediction value/° | Difference between experimental value (after three day) and prediction value/° | Error of prediction value with respect to experimental value/% |
| Third comparative example | - | - | 7.2 | 0.6 | 7.7 |
| Seventh invention example | 10 | 0 | 7.6 | 0.2 | 2.6 |
| Eighth invention example | 10 | 5 | 7.9 | -0.1 | -1.3 |
| Ninth invention example | 20 | 10 | 8.2 | -0.4 | -5.1 |

In Table 4, the prediction value is a prediction value of the torsional angle that is the inclination of the top portion 33 at the end in the longitudinal direction with respect to the top portion 33 in the middle in the longitudinal direction. In addition, a difference between the actual measurement value and the prediction value and an error of the prediction value with respect to the actual measurement value were calculated and described together.

In the third comparative example, the prediction value of the torsional angle was 7.2°, the difference between the actual measurement value and the prediction value was 0.6°, and the error of the prediction value was 7.7%.

In the seventh invention example, a value of stress in which the residual stress is relaxed and reduced by 10% is set only for the flange portion 37 on the outer side of the curve. The prediction value increased to 7.6°, the difference between the actual measurement value and the prediction value was 0.2°, and the error of the prediction value was 2.6%, whereby the prediction value became closer to the actual measurement value than the third comparative example.

In the eighth invention example, a value of stress acquired by relaxation and reduction of the residual stress by 10% is set for the flange portion 37 on the outer side of the curve, and a value of stress acquired by relaxation and reduction of the residual stress by 5% is set for the top portion 33 on the inner side of the curve. The prediction value increased to 7.9°, the difference between the actual measurement value and the prediction value was -0.1°, and the error of the prediction value was -1.3%. Although being negative values, when compared in terms of absolute values, both of the difference and the error were more improved than the third comparative example and the seventh invention example and were well.

In the ninth invention example, a value of stress acquired by relaxation and reduction of the residual stress by 20% is set for the flange portion 37 on the outer side of the curve, and a value of stress acquired by relaxation and reduction of the residual stress by 10% is set for the top portion 33 on the inner side of the curve. The prediction value increased to 8.2°, the difference between the actual measurement value and the prediction value was - 0.4°, and the error of the prediction value was -5.1%. Although being negative values, when compared in terms of absolute values, both of the difference and the error were more improved than the third comparative example and were well.

### Industrial Applicability

According to the present invention, it is possible to provide a shape change prediction method of a press formed part in which method a shape change of the press formed part with the lapse of a time unit after springback at the moment of a die release from a tool of press forming is predicted with respect to the press formed part having a U-shaped cross-sectional shape or a Z-shaped cross-sectional shape and having a shape curved in a longitudinal direction in a top view.

### Reference Signs List

- 1: PRESS FORMED PART
- 3: TOP PORTION
- 5: SIDE WALL PORTION
- 5a: SIDE WALL PORTION (INNER SIDE OF CURVE)
- 5b: SIDE WALL PORTION (OUTER SIDE OF CURVE)
- 7: PUNCH SHOULDER R PORTION
- 11: PRESS FORMED PART
- 13: TOP PORTION (OUTER SIDE OF CURVE)
- 15: SIDE WALL PORTION
- 17: FLANGE PORTION (INNER SIDE OF CURVE)
- 19: PUNCH SHOULDER R PORTION
- 21: DIE SHOULDER R PORTION
- 31: PRESS FORMED PART
- 33: TOP PORTION (INNER SIDE OF CURVE)
- 35: SIDE WALL PORTION
- 37: FLANGE PORTION (OUTER SIDE OF CURVE)
- 39: PUNCH SHOULDER R PORTION
- 41: DIE SHOULDER R PORTION

## Claims

1. A shape change prediction method of a press formed part, the shape change prediction method predicting a shape change in which an end side in a longitudinal direction is twisted due to stress relaxation with a lapse of time after springback at a moment of die release from a tool of press forming with respect to the press formed part having a U-shaped cross-sectional shape including a top portion and a pair of side wall portions continuous from the top portion and having a shape curved in the longitudinal direction in a top view, and the shape change prediction method comprising:
a shape/residual stress immediately after the springback acquisition step of acquiring a shape and a residual stress of the press formed part immediately after the springback by a springback analysis of the press formed part;
a residual stress relaxation and reduction setting step of setting a value of stress relaxed and reduced compared to the residual stress immediately after the springback for at least one of the pair of side wall portions of the press formed part immediately after the springback; and
a residual stress relaxation shape analysis step of acquiring a shape with which moment of force is balanced for the press formed part in which the value of the relaxed and reduced stress is set.

2. A shape change prediction method of a press formed part, the shape change prediction method predicting a shape change in which an end side in a longitudinal direction is twisted due to stress relaxation with a lapse of time after springback at a moment of die release from a tool of press forming with respect to the press formed part having a Z-shaped cross-sectional shape including a top portion, a side wall portion continuous from the top portion, and a flange portion continuous from the side wall portion and having a shape curved in the longitudinal direction in a top view, the shape change prediction method comprising:
a shape/residual stress immediately after the springback acquisition step of acquiring a shape and a residual stress of the press formed part immediately after the springback by a springback analysis of the press formed part;
a residual stress relaxation and reduction setting step of setting a value of stress relaxed and reduced compared to the residual stress immediately after the springback for at least the top portion and/or the flange portion of the press formed part immediately after the springback; and
a residual stress relaxation shape analysis step of acquiring a shape with which moment of force is balanced for the press formed part in which the value of the relaxed and reduced stress is set.

3. The shape change prediction method of a press formed part according to claim 1 or 2, wherein in the residual stress relaxation and reduction setting step, the value of stress relaxed and reduced by 5% or more as compared with the residual stress immediately after the springback is set.

4. The shape change prediction method of a press formed part according to any one of claims 1 to 3, wherein a blank to be used for press forming of the press formed part is a metal sheet having a tensile strength of a 150 MPa-grade or more and a 2000 MPa-grade or less.
